# EUROPÄISCHE PATENTSCHRIFT

(11) **EP 1 848 585 B1**
(45) Veröffentlichungstag und Bekanntmachung des Hinweises auf die Patenterteilung: **30.07.2008**
(21) Anmeldenummer: 06702887.8
(22) Anmeldetag: 04.01.2006
(51) Int. Cl.: B32B 27/34, C08L 77/00, C08L 77/02, C08L 77/10

(54) **TRANSPARENTE, DEKORIERBARE MEHRSCHICHTIGE FOLIE**
TRANSPARENT DECORATABLE MULTILAYER FILM
FEUILLE MULTICOUCHE TRANSPARENTE POUVANT ETRE DECOREE

(30) Priorität: 19.02.2005 DE 102005007663
(43) Veröffentlichungstag der Anmeldung: 31.10.2007
(73) Patentinhaber: Evonik Degussa GmbH, 40474 Düsseldorf (DE)
(72) Erfinder: HÄGER, Harald, 59348 Lüdingshausen (DE); BEYER, Michael, 46348 Raesfeld (DE); BAUMANN, Franz-erich, 48249 Dülmen (DE)
(86) Internationale Anmeldenummer: PCT/EP2006/050037
(87) Internationale Veröffentlichungsnummer: WO 2006/087249

(56) Entgegenhaltungen:
- EP-A2- 0 622 183
- EP-A2- 0 779 084
- EP-A2- 1 329 481
- US-A- 5 437 755

## Beschreibung

Die Erfindung betrifft dekorierbare mehrschichtige Folien aus mindestens zwei verschiedenen Polyamidformmassen.

Teilkristalline Polyamidformmassen können zu Folien extrudiert werden und weisen in Schichtdicken bis zu 1 mm eine gute Transparenz auf. Derartige Folien können durch Thermosublimationsdruck dekoriert werden; sie können beispielsweise zur Dekoration von Snowboards, Skiern, Tennisschlägern, Automobilteilen, Möbeln, Haushaltsgegenständen und dergleichen in Schichtdicken von etwa 0,05 bis 1 mm verwendet werden. Der Stand der Technik wird im Artikel von M. Beyer und J. Lohmar, Kunststoffe 90 (2000) 1, S. 98 - 101, bezogen auf entsprechende Formmassen der Degussa AG, dargestellt.

Eine preiswertere und vielseitigere Methode zur Dekoration von Folien stellt der Siebdruck dar. Siebdruckfarben sind in einer Variante lösemittelbasierende Farben. Eine typische Rezeptur einer Siebdruckfarbe setzt sich zusammen aus dem Pigment, Additiven, Lösemitteln und Bindemitteln. Durch die geeignete Wahl des Lösemittels lässt sich die Farbhaftung zur bedruckten Matrix beeinflussen, d. h. durch Anlösen der Matrix, in diesem Fall des Kunststoffes, durch das Lösemittel entsteht ein direkter Verbund zwischen Matrix und Farbfilm. Daher muss das Lösemittel auf die zu bedruckende Matrix abgestimmt werden.

Teilkristalline Polyamide können durch lösemittelhaltige Siebdruckfarben aufgrund ihrer hervorragenden Beständigkeit gegen Lösemittel im allgemeinen nicht ausreichend gut bedruckt werden. Daher werden auch zum Beispiel Siebdruckgewebe aus Polyamiden hergestellt.

Durch die Verringerung der Kristallinität, z. B. durch den Einbau von Comonomeren, kann die Anlösbarkeit von Polyamiden durch die Lösemittel in Siebdruckfarben verbessert werden. Außerdem wird durch die Verringerung der Kristallinität gleichzeitig die Transparenz verbessert.

Der Möglichkeit, durch den Einbau von Comonomeren die Siebbedruckbarkeit und die Transparenz von Polyamidfolien zu verbessern, sind allerdings in der Praxis sehr enge Grenzen gesetzt, da die üblichen Lösemittel in Siebdruckfarben, etwa Nitroverdünnung, Ethylacetat oder Methylethylketon, zu Spannungsrissbildung auf dem modifizierten Polyamid führen. Dies führt zu unerwünschten Farbeffekten (Mattierung) und zu einer Versprödung der Folie. Vor allem die Versprödung kann bei der Weiterverarbeitung, d. h. dem Verpressen mit dem zu dekorierenden Artikel, zu einem mechanischen Versagen der Folie führen.

EP-A2-0 779 084 offenbart:
dekorative, bedruckbare Mehschichtfolien aus Polyamidformmassen als Oberbelag für Skis aus einer co-extrudierten Zweischichtfolie, enthaltend Copolyamide mit Monomereinheiten ausgewählt aus Laurinlactam, Caprolactam, HMDA/Dicarbonsäure, sowie Zusatzstoffen.

### Dokument D2

US-A-5 437 755 spezifiziert Bedruckbarkeit und Ingredentien der aliphatischen Polyamide, Copolyamide, sowie Mischungen auf Polyamid- und modifizierten Polyolefinen, Carbonsäure- und deren Anhydriden.

### D3

EP-A2-0 622 183 offenbart tiefziehbare Recyclingfolien auf Basis von Polyamiden und Polyolefinen, wobei der Polyamidanteil der Scrap-Schicht durch Anspruch 1 auf < 45 % limitiert ist.

### D4

EP-A2-1 329 481 offenbart Polyetheramid-Formmassen (99.9-95% Polyetheramid) welche als Rest ein weiteres Copolymer mit Säureanhydrid, Glutarimid u/o Epoxid als Bausteine enthalten (Anspr 1, 13, 15-17). Diese Formmassen können zu Mehrschichtrohren coextrudiert werden.

Es bestand daher die Aufgabe, eine transparente Folie zu entwickeln, die eine gute Haftung zu Siebdruckfarben aufweist, ohne beim Dekorieren oder der Weiterverarbeitung zu verspröden.

Diese Aufgabe wird gelöst durch eine mehrschichtige Folie, die folgende Schichten enthält:
I. Eine obenliegende Schicht aus einer bei der gewählten Schichtdicke transparenten Polyamidformmasse sowie
II. eine untenliegende Schicht aus einer Polyamidformmasse, die folgende Komponenten enthält:
   a) 70 bis 99 Gew.-%, bevorzugt 80 bis 98 Gew.-% und besonders bevorzugt 90 bis 97 Gew.-% eines Polyamids ausgewählt aus
      α) Polyamiden, herstellbar aus Lactammonomeren oder den entsprechenden ω-Aminocarbonsäuren mit 6, 7, 8, 9, 10, 11 oder 12 C-Atomen,
      β) Polyamiden auf Basis von Diamin und Dicarbonsäuren mit jeweils 6 bis 18 C-Atomen, wie beispielsweise PA6, PA66, PA68, PA610, PA612, PA88, PA810, PA1010, PA1012 oder PA1212,
      γ) Polyamidelastomeren, herstellbar aus oligomeren, difunktionellen Bausteinen auf Basis eines der unter α) und β) genannten Polyamide (Mₙ = 200 bis 10 000, bevorzugt 600 bis 7 000 und besonders bevorzugt 800 bis 5 000) und eines difunktionellen Oligoalkylenglykols (Mₙ = 120 bis 6 000, bevorzugt 200 bis 4 000 und besonders bevorzugt 250 bis 2 500),
      δ) Copolyamiden, herstellbar aus den Komponenten
         - 50 bis 99,9 Mol-%, bevorzugt 60 bis 99 Mol-%, besonders bevorzugt 70 bis 98 Mol-%, insbesondere bevorzugt 80 bis 97 Mol-% und ganz besonders bevorzugt 85 bis 96 Mol-% oder 90 bis 95 Mol-% eines Lactams oder der entsprechenden ω-Aminocarbonsäure mit 6, 7, 8, 9, 10, 11 oder 12 C-Atomen oder eines im wesentlichen äquimolaren Gemisches aus einem Diamin mit einer Dicarbonsäure mit jeweils 6 bis 18 C-Atomen, wobei Diamin und Dicarbonsäure bei der Berechnung der Zusammensetzung jeweils einzeln gezählt werden und
         - 0,1 bis 50 Mol-%, bevorzugt 1 bis 40 Mol-%, besonders bevorzugt 2 bis 30 Mol-%, insbesondere bevorzugt 3 bis 20 Mol-% und ganz besonders bevorzugt 4 bis 15 Mol-% oder 4 bis 10 Mol-% eines im wesentlichen äquimolaren Gemisches aus einem Diamin und einer Dicarbonsäure, wobei entweder das Diamin oder die Dicarbonsäure oder beide sich von dem gegebenenfalls bei der anderen Komponente eingesetzten Diamin bzw. der gegebenenfalls bei der anderen Komponente eingesetzten Dicarbonsäure unterscheiden, oder eines Lactams bzw. der entsprechenden ω-Aminocarbonsäure, die sich vom gegebenenfalls verwendeten Lactam bzw.. der entsprechenden ω-Aminocarbonsäure der Hauptkomponente unterscheiden. Diamin und Dicarbonsäure werden auch hier bei der Berechnung der Zusammensetzung jeweils einzeln gezählt. In einer möglichen Ausführungsform sind entweder das Diamin oder die Dicarbonsäure oder beide linear, verzweigt, cycloaliphatisch oder aromatisch;
   b) 1 bis 30 Gew.-%, bevorzugt 2 bis 20 Gew.-% und besonders bevorzugt 3 bis 10 Gew.-% eines Copolymeren, das Einheiten der folgenden Monomere enthält:
      α) 20 bis 94,5 Gew.-% eines oder mehrerer α-Olefine mit 2 bis 12 C-Atomen,
      β) 5 bis 79,5 Gew.-% einer oder mehrerer acrylischer Verbindungen, ausgewählt aus
         - Acrylsäure bzw. Methacrylsäure bzw. deren Salzen,
         - Estern von Acrylsäure bzw. Methacrylsäure mit einem C₁- bis C₁₂-Alkohol, die gegebenenfalls eine freie Hydroxyl- oder Epoxidfunktion tragen können,
         - Acrylnitril bzw. Methacrylnitril,
         - Acrylamiden bzw. Methacrylamiden,
      γ) 0 bis 50 Gew.-%, bevorzugt 0,1 bis 30 Gew.-% und besonders bevorzugt 0,5 bis 20 Gew.-% eines olefinisch ungesättigten Epoxids, Carbonsäureanhydrids, Carbonsäureimids, Oxazolins oder Oxazinons.

Die Polyamidformmasse der Schicht gemäß I. kann entweder transparent oder soweit transluzent sein, dass sie bei der gewählten Schichtdicke transparent erscheint. Transparenz bedeutet hier, dass beim Hinterdrucken eine ausreichende Konturschärfe bei Aufsicht von oben gegeben ist. Hierfür kann jedes bekannte transparente oder transluzente Polyamid eingesetzt werden. Um eine ausreichende Lösemittel- und Spannungsrissbeständigkeit zu gewährleisten, ist die Polyamidformmasse der Schicht gemäß I. bevorzugt teilkristallin.

Das Polyamid der Schicht gemäß I. kann beispielsweise aus folgender Monomerenkombination hergestellt werden:
α) 50 bis 99,9 Mol-%, bevorzugt 60 bis 99 Mol-%, besonders bevorzugt 70 bis 98 Mol-%, insbesondere bevorzugt 80 bis 97 Mol-% und ganz besonders bevorzugt 85 bis 96 Mol-% oder 90 bis 96 Mol-% eines Lactams oder der entsprechenden ω-Aminocarbonsäure mit 6, 7, 8, 9, 10, 11 oder 12 C-Atomen oder eines im wesentlichen äquimolaren Gemisches aus einem linearen aliphatischen Diamin mit einer linearen aliphatischen oder aromatischen Dicarbonsäure, wobei Diamin und Dicarbonsäure jeweils 6 bis 18 C-Atome enthalten und bei der Berechnung der Zusammensetzung jeweils einzeln gezählt werden und
β) 0,1 bis 50 Mol-%, bevorzugt 1 bis 40 Mol-%, besonders bevorzugt 2 bis 30 Mol-%, insbesondere bevorzugt 3 bis 20 Mol-% und ganz besonders bevorzugt 4 bis 15 Mol-% oder 4 bis 10 Mol-% eines im wesentlichen äquimolaren Gemisches aus einem Diamin und einer Dicarbonsäure, wobei entweder das Diamin oder die Dicarbonsäure oder beide sich von dem gegebenenfalls unter α) eingesetzten Diamin bzw. der gegebenenfalls unter α) eingesetzten Dicarbonsäure unterscheiden, oder eines Lactams bzw. der entsprechenden ω-Aminocarbonsäure, die sich vom gegebenenfalls verwendeten Lactam bzw. der entsprechenden ω-Aminocarbonsäure der Komponente α) unterscheiden. Diamin und Dicarbonsäure werden auch hier bei der Berechnung der Zusammensetzung jeweils einzeln gezählt. In einer möglichen Ausführungsform sind entweder das Diamin oder die Dicarbonsäure oder beide linear, verzweigt, cycloaliphatisch oder aromatisch.

In einer bevorzugten Ausführungsform hiervon sind im Monomerengemisch der Komponente gemäß α) pro Monomer im Mittel 8 bis 12 und besonders bevorzugt 9 bis 12 C-Atome enthalten.

Geeignete Diamine der Komponente β) haben 4 bis 40 C-Atome; beispielsweise kommen hier 1.6-Hexamethylendiamin, 2-Methyl-1.5-diaminopentan, 2.2.4- bzw. 2.4.4-Trimethylhexamethylendiamin, 1.9-Nonamethylendiamin, 1.10-Decamethylendiamin, 4.4'-Diaminodicyclohexylmethan, 3.3'-Dimethyl-4.4'-diaminodicyclohexylmethan, 4.4'-Diaminodicyclohexylpropan, 1.4-Diaminocyclohexan, 1.4-Bis(aminomethyl)cyclohexan, 2.6-Bis(aminomethyl)norboman und 3-Aminomethyl-3.5.5-trimethylcyclohexylamin in Frage. Es können auch Mischungen verschiedener Diamine eingesetzt werden.

Geeignete Dicarbonsäuren der Komponente β) haben ebenfalls 4 bis 40 C-Atome; Beispiele hierfür sind Adipinsäure, 2.2.4- bzw. 2.4.4-Trimethyladipinsäure, Azelainsäure, Sebacinsäure, 1.12-Dodecandisäure, Cyclohexan-1.4-dicarbonsäure, 4.4'-Dicarboxydicyclohexylmethan, 3.3'-Dimethyl-4.4'-dicarboxydicyclohexylmethan, 4.4'-Diearboxydicyclohexylpropan und 1.4-Bis(carboxymethyl)cyclohexan. Es können auch Mischungen verschiedener Dicarbonsäuren eingesetzt werden.

Geeignete andere Lactame bzw. entsprechende ω-Aminocarbonsäuren sind diejenigen mit 6, 7, 8, 9, 10, 11 oder 12 C-Atomen.

Ein anderes Beispiel für das Polyamid der Schicht gemäß I. sind Polyamide, herstellbar aus
- linearen aliphatischen Dicarbonsäuren mit 6 bis 14 C-Atomen und
- einer Diaminkomponente, die zusammengesetzt ist aus
   a) 35 bis 60 Mol-% trans,trans-Bis(4-aminocyclohexyl)methan und
   b) 65 bis 40 Mol-% anderer, aliphatischer, cycloaliphatischer, araliphatischer oder aromatischer Diamine.

Derartige Polyamide sind in der EP 0 619 336 A2 offenbart, auf die hiermit ausdrücklich Bezug genommen wird. Als Diaminkomponente wird insbesondere das Isomerengemisch des Bis(4-aminocyclohexyl)methans eingesetzt.

Die Formmasse der Schicht gemäß I. kann auch ein Blend aus verschiedenen, miteinander kompatiblen Polyamiden sein, beispielsweise aus PA12 und PA1012 oder aus einem amorphen und einem teilkristallinen Polyamid. Geeignet ist beispielsweise eine Mischung aus PA66 und PA6IT, die bei geeigneten Mischungsverhältnissen transparent und teilkristallin ist. PA6IT ist das Copolyamid aus Hexamethylendiamin, Isophthalsäure und Terephthalsäure.

Die Formmasse der Schicht gemäß I. ist bevorzugt teilkristallin mit einem Kristallitschmelzpunkt Tₘ im Bereich von 100 bis 270 °C, bevorzugt 120 bis 220 °C und besonders bevorzugt 140 bis 200 °C. Die Schmelzenthalpie der Formmasse beträgt bevorzugt mindestens 10 J/g und besonders bevorzugt mindestens 15 J/g, mindestens 20 J/g, mindestens 25 J/g, mindestens 30 J/g, mindestens 35 J/g, mindestens 40 J/g, mindestens 45 J/g, mindestens 50 J/g oder mindestens 55 J/g. Tₘ und Schmelzenthalpie werden durch DDK gemäß ISO 11357 in der 2. Aufheizkurve mit einer Heizrate von 20 K/min bestimmt.

Die Dicke der Schicht gemäß I. liegt in der Regel im Bereich von 0,02 bis 1 mm, bevorzugt im Bereich von 0,05 bis 0,8 mm, besonders bevorzugt im Bereich von 0,1 bis 0,6 mm, insbesondere bevorzugt im Bereich von 0,2 bis 0,5 mm und ganz besonders bevorzugt im Bereich von 0,3 bis 0,5 mm.

Die Polyamide bzw. Copolyamide und Polyamidelastomere der Schicht II. und ihre Herstellung sind Stand der Technik.

Das Polyamid gemäß II. a) α) basiert vorzugsweise auf Monomeren mit 8, 9, 10, 11 oder 12 C-Atomen.

Beim Polyamid gemäß II. a) β) enthalten die Monomereinheiten im Mittel vorzugsweise 8 bis 12 und besonders bevorzugt 9 bis 12 C-Atome.

Das Polyamidelastomere gemäß II. a) γ) kann insbesondere ein Polyetheramid oder ein Polyetheresteramid sein. Das Polyetheramid ist herstellbar entweder aus Polyamid-Bausteinen mit zwei Carboxylendgruppen und Oligoalkylenglykol mit zwei Aminoendgruppen oder aus Polyamid-Bausteinen mit zwei Aminoendgruppen und Oligoalkylenglykol mit zwei Carboxylendgruppen. Entsprechend können Polyetheresteramide durch Umsetzung eines Polyamid-Bausteins mit zwei Carboxylendgruppen und Oligoalkylenglykol mit zwei Hydroxylendgruppen hergestellt werden. Im Oligoalkylenglykol bedeutet das Alkylen in der Regel Ethylen, 1.2-Propylen, 1.3-Propylen, 1.2-Butylen oder 1.4-Butylen, wobei das Oligoalkylenglykol ein Homopolymerisat oder ein Copolymerisat sein kann. In einer bevorzugten Ausführungsform besitzt das Oligoalkylenglykol mehr als durchschnittlich 2,3 C-Atome pro Sauerstoffatom. Hinsichtlich geeigneter Polyamidelastomere sei beispielsweise auf die EP 1 329 481 A2, die DE-OS 103 33 005 sowie die dort genannte Literatur verwiesen.

Beim Copolyamid gemäß II. a) δ) enthalten die Monomereneinheiten der Hauptkomponente im Mittel vorzugsweise 8 bis 12 und besonders bevorzugt 9 bis 12 C-Atome.

Geeignete Diamine der zweiten Komponente haben 4 bis 40 C-Atome; beispielsweise kommen hier 1.6-Hexamethylendiamin, 2-Methyl-1.5-diaminopentan, 2.2.4- bzw. 2.4.4-Trimethylhexamethylendiamin, 1.9-Nonamethylendiamin, 1.10-Decamethylendiamin, 4.4'-Diaminodicyclohexylmethan, 3.3'-Dimethyl-4.4'-diaminodicyclohexylmethan, 4.4'-Diaminodicyclohexylpropan, 1.4-Diaminocyclohexan, 1.4-Bis(aminomethyl)cyclohexan, 2.6-Bis(aminomethyl)norboman und 3-Aminomethyl-3.5.5-trimethylcyclohexylamin in Frage. Es können auch Mischungen verschiedener Diamine eingesetzt werden.

Geeignete Dicarbonsäuren der zweiten Komponente haben ebenfalls 4 bis 40 C-Atome; Beispiele hierfür sind Adipinsäure, 2.2.4- bzw. 2.4.4-Trimethyladipinsäure, Azelainsäure, Sebacinsäure, 1.12-Dodecandisäure, Cyclohexan-1.4-dicarbonsäure, 4.4'-Dicarboxydicyclohexylmethan, 3.3'-Dimethyl-4.4'-dicarboxydicyclohexylmethan, 4.4'-Dicarboxydicyclohexylpropan und 1.4-Bis(carboxymethyl)cyclohexan. Es können auch Mischungen verschiedener Dicarbonsäuren eingesetzt werden.

Selbstverständlich kann die Formmasse der Schicht gemäß II. auch eine Polyamidmischung in jedem beliebigen Mischungsverhältnis enthalten, beispielsweise der Typen gemäß α) und β) (etwa PA12 und PA1012), der Typen gemäß α) und γ), der Typen gemäß β) und γ) oder der Typen gemäß δ) und γ).

Das Copolymere gemäß II. b) ist beispielsweise aus folgenden Monomeren zusammengesetzt,
wobei diese Aufzählung nicht erschöpfend ist:
a) α-Olefine wie beispielsweise Ethylen, Propen, 1-Buten, 1-Penten, 1-Hexen, 1-Octen, 1-Decen oder 1-Dodecen;
b) Acrylsäure, Methacrylsäure oder deren Salze, beispielsweise mit Na^{⊕} oder Zn^{2⊕} als Gegenion; Methylacrylat, Ethylacrylat, n-Propylacrylat, n-Butylacrylat, Isobutylacrylat, n-Hexylacrylat, n-Octylacrylat, 2-Ethylhexylacrylat, Isononylacrylat, Dodecylacrylat, Methylmethacrylat, Ethylmethacrylat, n-Propylmethacrylat, n-Butylmethacrylat, Isobutylmethacrylat, 2-Ethylhexylmethacrylat, Hydroxyethylacrylat, 4-Hydroxybutylmethacrylat, Glycidylacrylat, Glycidylmethacrylat, Acrylnitril, Methacrylnitril, Acrylamid, N-Methylacrylamid, N,N-Dimethylacrylamid, N-Ethylacrylamid, N-Hydroxyethylacrylamid, N-Propylacrylamid, N-Butylacrylamid, N-(2-Ethylhexyl)acrylamid, Methacrylamid, N-Methylmethacrylamid, N,N-Dimethylmethacrylamid, N-Ethylmethacrylamid, N-Hydroxyethylmethacrylamid, N-Propylmethacrylamid, N-Butylmethacrylamid, N,N-Dibutylmethacrylamid, N-(2-Ethylhexyl)methacrylamid;
c) Vinyloxiran, Allyloxiran, Glycidylacrylat, Glycidylmethacrylat, Maleinsäureanhydrid, Aconitsäureanhydrid, Itaconsäureanhydrid, ferner die aus diesen Anhydriden durch Reaktion mit Wasser entstehenden Dicarbonsäuren; Maleinimid, N-Methylmaleinimid, N-Ethylmaleinimid, N-Butylmaleinimid, N-Phenylmaleinimid, Aconitsäureimid, N-Methylaconitsäureimid, N-Phenylaconitsäureimid, Itaconsäureimid, N-Methylitaconsäureimid, N-Phenylitaconsäureimid, N-Acryloylcaprolactam, N-Methacryloylcaprolactam, N-Acryloyllaurinlactam, N-Methacryloyllaurinlactam, Vinyloxazolin, Isopropenyloxazolin, Allyloxazolin, Vinyloxazinon oder Isopropenyloxazinon. Bei einer Verwendung von Glycidylacrylat oder Glycidylmethacrylat fungieren diese gleichzeitig auch als acrylische Verbindung b), so dass bei ausreichender Menge des Glycidyl(meth)acrylats keine weitere acrylische Verbindung enthalten zu sein braucht.

In dieser speziellen Ausführungsform hat das Copolymere die Zusammensetzung
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C₁- bis C₁₂-Alkohol,
   - Acrylnitril bzw. Methacrylnitril,
   - Acrylamiden bzw. Methacrylamiden,
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

Darüber hinaus kann das Copolymere in kleiner Menge weitere einpolymerisierte Monomere enthalten, sofern diese die Eigenschaften nicht nennenswert beeinträchtigen, wie beispielsweise Maleinsäuredimethylester, Fumarsäuredibutylester, Itaconsäurediethylester oder Styrol.

Die Herstellung derartiger Copolymerer ist Stand der Technik. Eine Vielzahl verschiedener Typen hiervon ist als Handelsprodukt erhältlich, beispielsweise unter der Bezeichnung LOTADER^{®} (Elf Atochem; Ethylen/Acrylat/Terkomponente bzw. Ethylen/Glycidylmethacrylat).

Die Schicht gemäß II. hat in der Regel eine Dicke von 0,02 bis 0,6 mm, bevorzugt von 0,05 bis 0,4 mm, besonders bevorzugt von 0,1 bis 0,3 mm und insbesondere bevorzugt von 0,1 bis 0,2 mm. Bei dieser Dicke besitzt die Formmasse eine gute Transparenz.

Die Formmassen der Schicht gemäß I. und II. können weitere Zusätze enthalten, sofern dadurch die Transparenz nicht wesentlich beeinträchtigt wird, beispielsweise Kautschuke wie etwa isorefraktive Acrylatkautschuke sowie übliche Hilfs- und Zusatzstoffe in den für Polyamidformmassen üblichen Mengen, beispielsweise Stabilisatoren, Gleitmittel, Farbstoffe oder Nucleierungsmittel, die vorzugsweise ausgewählt sind aus nanoskaligen Füllstoffen und Metallsalzen, Metalloxiden oder Metallhydroxiden, die mit den in der Formmasse vorliegenden Carboxylgruppen reagieren können.

Die Folie kann darüber hinaus weitere Schichten enthalten, beispielsweise eine Haftvermittlerschicht zur Anbindung an das Substrat oder zur Verbindung innerhalb des mehrschichtigen Folienaufbaus. Bei Bedarf, etwa bei erhöhten Anforderungen an die Kratzfestigkeit, kann die Deckschicht gegebenenfalls noch mit einer Schutzschicht versehen sein, beispielsweise mit einem Klarlack auf Polyurethanbasis. Sie kann auch gegebenenfalls mit einer Montagefolie abgedeckt sein, die nach der Herstellung des Fertigteils abgezogen wird.

Die erfindungsgemäße Folie lässt sich ausgezeichnet durch Drucken dekorieren, bevorzugt mittels Sieb- oder Offsetdruck auf der nach außen weisenden Seite der Schicht gemäß II.

Die Folie kann beispielsweise als Schutzfolie gegen Verschmutzung, UV-Strahlung, Witterungseinflüsse, Chemikalien oder Abrieb verwendet werden, als Sperrfolie an Fahrzeugen, im Haushalt, an Böden, Tunnels, Zelten und Gebäuden oder als Dekorträger etwa für Oberbeläge von Sportgeräten, Innen- oder Außendekorationen an Kraftfahrzeugen, Booten, im Haushalt oder an Gebäuden. Die stoffschlüssige Verbindung der Folie zum Substrat kann beispielsweise durch Verkleben, Verpressen, Laminieren, Coextrusion oder Hinterspritzen hergestellt werden. Zum Erreichen einer verbesserten Haftung kann die Folie zuvor beispielsweise beflammt oder mit einem Plasma behandelt werden.

In einer bevorzugten Ausführungsform wird die erfindungsgemäße Folie als Oberbelag für Schneebretter aller Art, wie Skier oder Snowboards, verwendet.

Die Erfindung wird nachfolgend beispielhaft illustriert.

### Vergleichsbeispiel 1:

Ein Copolyamid aus Laurinlactam (85 Mol-%), Isophorondiamin (7,5 Mol-%) und 1.12-Dodecandisäure (7,5 Mol-%) mit einem Kristallitschmelzpunkt Tₘ von 163 °C zeigte als 0,4 mm dicke Monofolie eine gute Haftung zu Siebdruckfarben und Epoxidharzverklebemassen sowie eine gute Transparenz. Die Folie versprödete allerdings beim Bedrucken bzw. bei der Behandlung mit der Verklebemasse.

### Vergleichsbeispiel 2:

Eine Formmasse aus 66,5 Gew.-% eines Polyetheresteramids mit einem Tₘ von 171 °C, zusammengesetzt aus PA12-Blöcken mit einer zahlenmittleren Molmasse von etwa 4300 und Oligotetrahydrofuran-Blöcken mit einer zahlenmittleren Molmasse von etwa 1000, 28,5 Gew.-% eines PA12 und 5 Gew.-% eines Ethylen-co-Acrylsäure-Copolymers (ESCOR^{®} 5200 der Exxon Mobil Chemicals) mit einem Acrylsäureanteil von 15 Gew.-% zeigte als 0,4 mm starke Monofolie eine gute Haftung zu Siebdruckfarben und Epoxidharzverklebemassen sowie keinerlei Versprödung beim Bedrucken bzw. bei der Behandlung mit der Verklebemasse. Die Transparenz der Folie war allerdings allenfalls mit "ausreichend" zu bewerten.

### Beispiel 1:

Es wurde eine Zweischichtfolie hergestellt aus dem Copolyamid des Vergleichsbeispiels 1 (Schichtdicke 0,3 mm) sowie der Formmasse des Vergleichsbeispiels 2 (Schichtdicke 0,1 mm). Die Folie wies eine gute Transparenz auf; nach Bedrucken mittels Siebdruck und Verkleben mit Epoxidharzverklebemasse (beides auf der Seite der Formmasse des Vergleichsbeispiels 2) zeigte sich eine gute Haftung zu den Siebdruckfarben und der Epoxidharzverklebemasse und keinerlei Versprödung.

Die Beispiele zeigen, dass mit Hilfe der erfindungsgemäßen Mehrschichtfolie ein ausgezeichneter Kompromiss zwischen Bedruckbarkeit und Verklebbarkeit einerseits und Transparenz andererseits erzielt werden kann.

## Patentansprüche

1. Mehrschichtige Folie, die folgende Schichten enthält:
I. Eine obenliegende Schicht aus einer bei der gewählten Schichtdicke transparenten Polyamidformmasse sowie
II. eine untenliegende Schicht aus einer Polyamidformmasse, die folgende Komponenten enthält:
a) 70 bis 99 Gew.-% eines Polyamids ausgewählt aus
α) Polyamiden, herstellbar aus Lactammonomeren oder den entsprechenden ω-Aminocarbonsäuren mit 6, 7, 8, 9, 10, 11 oder 12 C-Atomen,
β) Polyamiden auf Basis von Diamin und Dicarbonsäuren mit jeweils 6 bis 18 C-Atomen,
γ) Polyamidelastomeren, herstellbar aus oligomeren, difunktionellen Bausteinen auf Basis eines der unter α) und β) genannten Polyamide und eines difunktionellen Oligoalkylenglykols,
δ) Copolyamiden, herstellbar aus den Komponenten
- 50 bis 99,9 Mol-% eines Lactammonomeren oder der entsprechenden ω-Aminocarbonsäure mit 6, 7, 8, 9, 10, 11 oder 12 C-Atomen oder eines im wesentlichen äquimolaren Gemisches aus einem linearen aliphatischen Diamin und einer linearen aliphatischen oder aromatischen Dicarbonsäure mit jeweils 6 bis 18 C-Atomen, und
- 0,1 bis 50 Mol-% der Kombination eines Diamins und einer Dicarbonsäure,
wobei Diamin und Dicarbonsäure bei der Berechnung des molaren Anteils jeweils einzeln gezählt werden und wobei entweder das Diamin oder die Dicarbonsäure oder beide sich von dem gegebenenfalls bei der anderen Komponente eingesetzten Diamin bzw. der gegebenenfalls bei der anderen Komponente eingesetzten Dicarbonsäure unterscheiden, oder eines Lactams bzw. der entsprechenden ω-Aminocarbonsäure, die sich vom gegebenenfalls verwendeten Lactam bzw. der entsprechenden ω-Aminocarbonsäure der Hauptkomponente unterscheiden.
b) 1 bis 30 Gew.-% eines Copolymeren, das Einheiten der folgenden Monomere enthält:
α) 20 bis 94,5 Gew.-% eines oder mehrerer α-Olefine mit 2 bis 12 C-Atomen,
β) 5 bis 79,5 Gew.-% einer oder mehrerer acrylischer Verbindungen, ausgewählt aus
- Acrylsäure bzw. Methacrylsäure bzw. deren Salzen,
- Estern von Acrylsäure bzw. Methacrylsäure mit einem C₁- bis C₁₂-Alkohol, die gegebenenfalls eine freie Hydroxyl- oder Epoxidfunktion tragen können,
- Acrylnitril bzw. Methacrylnitril,
- Acrylamiden bzw. Methacrylamiden,
γ) 0 bis 50 Gew.-% eines olefinisch ungesättigten Epoxids, Carbonsäureanhydrids, Carbonsäureimids, Oxazolins oder Oxazinons.

2. Folie gemäß Anspruch 1,
**dadurch gekennzeichnet,**
**dass** die Schicht gemäß I. eine Dicke von 0,02 bis 1 mm und die Schicht gemäß II. eine Dicke von 0,02 bis 0,6 mm aufweist.

3. Folie gemäß einem der vorhergehenden Ansprüche,
**dadurch gekennzeichnet,**
**dass** sie ein Oberbelag für Skier oder Snowboards ist.

## Claims

1. Multilayer foil which comprises the following layers:
I. an upper layer composed of a polyamide molding composition which is transparent at the selected layer thickness, and
II. a lower layer composed of a polyamide molding composition which comprises the following components:
a) from 70 to 99% by weight of a polyamide selected from
α) polyamides that can be prepared from lactam monomers or from the corresponding ω-aminocarboxylic acids having 6, 7, 8, 9, 10, 11, or 12 carbon atoms,
β) polyamides based on diamine and dicarboxylic acids, in each case having from 6 to 18 carbon atoms,
γ) polyamide elastomers that can be prepared from oligomeric, difunctional units based on one of the polyamides mentioned under α) and β), and on a difunctional oligoalkylene glycol,
δ) copolyamides that can be prepared from the following components:
- from 50 to 99.9 mol% of a lactam monomer or of the corresponding ω-aminocarboxylic acid having 6, 7, 8, 9, 10, 11, or 12 carbon atoms, or of a substantially equimolar mixture composed of a linear aliphatic diamine and of a linear aliphatic or aromatic dicarboxylic acid in each case having from 6 to 18 carbon atoms, and
- from 0.1 to 50 mol% of the combination of a diamine and a dicarboxylic acid,
where diamine and dicarboxylic acid are in each case counted separately in calculations of the molar fraction, and where either the diamine or the dicarboxylic acid or both differ from the diamine used, if appropriate, in the other component and, respectively, the dicarboxylic acid used, if appropriate, in the other component, or of a lactam and, respectively, the corresponding ω-aminocarboxylic acid, which differ from the lactam used, if appropriate, and, respectively, the corresponding ω-aminocarboxylic acid of the main component.
b) from 1 to 30% by weight of a copolymer which contains units of the following monomers:
α) from 20 to 94.5% by weight of one or more α-olefins having from 2 to 12 carbon atoms,
β) from 5 to 79.5% by weight of one or more acrylic compounds, selected from
- acrylic acid and methacrylic acid and salts thereof,
- esters of acrylic acid and, respectively, methacrylic acid with a C₁-C₁₂ alcohol, where these may, if appropriate, bear a free hydroxyl function or free epoxy function,
- acrylonitrile and methacrylonitrile,
- acrylamides and methacrylamides, γ) from 0 to 50% by weight of an olefinically unsaturated epoxide, carboxylic anhydride, carboximide, oxazoline, or oxazinone.

2. Foil according to Claim 1,
**characterized in that**
the thickness of the layer I. is from 0.02 to 1 mm, and the thickness of the layer II. is from 0.02 to 0.6 mm.

3. Foil according to any of the preceding claims,
**characterized in that**
it is an overcoating for skis or snowboards.

## Revendications

1. Feuille multicouche, qui contient les couches suivantes:
I. une couche supérieure faite d'une masse de moulage de polyamide, transparente pour l'épaisseur de couche sélectionnée, et
II. une couche inférieure faite d'une masse de moulage de polyamide, qui contient les composants suivants:
a) de 70 à 99 % en poids d'un polyamide sélectionné parmi
α) des polyamides, que l'on peut fabriquer à partir de monomères de lactame ou d'acides ω-aminocarboxyliques correspondants ayant 6, 7, 8, 9, 10, 11 ou 12 atomes de C,
β) des polyamides à base de diamine et d'acides dicarboxyliques avec, à chaque fois, de 6 à 18 atomes de C,
γ) des élastomères de polyamide, que l'on peut fabriquer à partir d'éléments de base oligomères bifonctionnels à base d'un des polyamides cités sous α) et β) et d'un oligoalcylèneglycol bifonctionnel,
δ) des copolyamides, que l'on peut fabriquer à partir des composants
- de 50 à 99,9 % en moles d'un monomère de lactame ou de l'acide ω-aminocarboxylique correspondant, ayant 6, 7, 8, 9, 10, 11 ou 12 atomes de C ou d'un mélange pour l'essentiel équimolaire d'une diamine aliphatique linéaire et d'un acide dicarboxylique aliphatique ou aromatique linéaire, ayant à chaque fois de 6 à 18 atomes de C, et
- de 0,1 à 50 % en moles de la combinaison d'une diamine et d'un acide dicarboxylique,
la diamine et l'acide dicarboxylique lors du calcul de la portion molaire étant comptés à chaque fois individuellement et soit la diamine soit l'acide dicarboxylique soit les deux se différenciant de la diamine utilisée, le cas échéant, pour l'autre composant ou de l'acide dicarboxylique utilisé, le cas échéant, pour l'autre composant, ou d'un lactame ou de l'acide ω-aminocarboxylique correspondant, qui se différencient du lactame utilisé, le cas échéant, ou de l'acide ω-aminocarboxylique correspondant des composants principaux,
b) de 1 à 30 % en poids d'un copolymère, qui contient les unités des monomères suivants:
α) de 20 à 94,5 % en poids d'une ou de plusieurs α-oléfines ayant de 2 à 12 atomes de C,
β) de 5 à 79,5 % en poids d'un ou de plusieurs composés acryliques sélectionnés parmi
- l'acide acrylique ou l'acide méthacrylique ou leurs sels,
- des esters de l'acide acrylique ou de l'acide méthacrylique avec un alcool en C₁ à C₁₂, qui peuvent porter, le cas échéant, une fonction hydroxyle ou époxyde libre,
- l'acrylonitrile ou le méthacrylonitrile,
- des acrylamides ou des méthacrylamides,
γ) de 0 à 50 % en poids d'un époxyde, d'un anhydride carboxylique, d'un imide d'acide carboxylique, d'une oxazoline ou d'une oxazinone oléfiniquement insaturé(e).

2. Feuille selon la revendication 1, **caractérisée en ce que** la couche selon I a une épaisseur de 0,02 à 1 mm et **en ce que** la couche selon II a une épaisseur de 0,02 à 0,6 mm.

3. Feuille selon l'une quelconque des revendications précédentes, **caractérisée en ce qu'**elle constitue un revêtement pour skis ou pour snowboards.
